# EUROPÄISCHE PATENTSCHRIFT

(11) **EP 2 504 742 B1**
(45) Veröffentlichungstag und Bekanntmachung des Hinweises auf die Patenterteilung: **06.01.2016**
(21) Anmeldenummer: 10765456.8
(22) Anmeldetag: 15.10.2010
(51) Int. Cl.: G05B 19/409

(54) **FELDGERÄT MIT EINER ANZEIGEEINHEIT UND VERFAHREN ZUM BETREIBEN DER ANZEIGEEINHEIT**
FIELD DEVICE HAVING A DISPLAY UNIT AND METHOD FOR OPERATING SAID DISPLAY UNIT
APPAREIL DE TERRAIN AVEC UNITE D'AFFICHAGE, ET PROCÉDÉ PERMETTANT DE FAIRE FONCTIONNER L'UNITÉ D'AFFICHAGE

(30) Priorität: 24.11.2009 DE 102009047060
(43) Veröffentlichungstag der Anmeldung: 03.10.2012
(73) Patentinhaber: Endress+Hauser Flowtec AG, 4153 Reinach (CH); Endress+Hauser Conducta Gesellschaft für Mess- und Regeltechnik mbH & Co. KG, 70839 Gerlingen (DE); Endress+Hauser GmbH+Co. KG, 79689 Maulburg (DE); Endress+Hauser Wetzer GmbH+Co. KG, 87484 Nesselwang (DE)
(72) Erfinder: FINK, Nikolai, CH-4147 Aesch (CH); VON STEIN, Bert, 79669 Zell i. W. (DE); SEGUIN, Holger, 87471 Durach (DE); CHOMIK, Alain, F-68840 Pulversheim (FR); BRUDERMANN, Matthias, CH-4313 Moehlin (CH); HARTMANN, Thomas, 88213 Ravensburg (DE); HUFSCHMID, Elmar, 79774 Albbruck (DE); WEIBEL, Mathieu, F-68300 Saint Louis (FR)
(74) Vertreter: Andres, Angelika Maria
(86) Internationale Anmeldenummer: PCT/EP2010/065496
(87) Internationale Veröffentlichungsnummer: WO 2011/064046

(56) Entgegenhaltungen:
- DE-A1- 10 340 234

## Beschreibung

Die Erfindung bezieht sich auf ein Verfahren zum Betreiben einer Anzeigeeinheit, welche Anzeigeeinheit Bestandteil eines Feldgeräts der Prozessautomatisierungstechnik ist oder mit einem solchen Feldgerät verbindbar ist.

Zudem bezieht sich die Erfindung auf ein Feldgerät der Prozessautomatisierungstechnik mit einer Anzeigeeinheit, welche Anzeigeeinheit Bestandteil des Feldgerätes ist oder an das Feldgerät angeschlossen ist bzw. oder anschliessbar ist.

In der Prozess- und/oder Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Diese Feldgeräte weisen oftmals eine Vor-Ort-Anzeigeeinheit auf, die zur Visualisierung von Messwerten und/oder gerätespezifischen Einstelllungen wie z.B. Parametern dient. Häufig ist eine solche Vor-Ort-Anzeigeeinheit auch mit einer Bedieneinheit zu einer Anzeige-/Bedieneinheit kombiniert.

Um Informationen auf der Vor-Ort-Anzeigeeinheit darzustellen, wird die Vor-Ort-Anzeigeeinheit heutzutage oftmals direkt von einer zentralen Elektronikeinheit des Feldgerätes gesteuert. Diese zentrale Elektronikeinheit polarisiert durch entsprechende Signale bspw. bei einem Liquid Crystal Display die zur Darstellung der Information notwendigen Bereiche. Dies erfordert aber eine spezifische Abstimmung zwischen der Elektronikeinheit und der Vor-Ort-Anzeigeeinheit. So können bei einer solchen Steuerung der Elektronikeinheit Informationen nur auf einem bestimmten Typ von Vor-Ort-Anzeigeeinheit darstellen werden.

Für die Inbetriebnahme einer automatisierungstechnischen Anlage ist es bspw. erforderlich, den Zustand eines Feldgerätes zu kennen. Des Weiteren ist es erforderlich, zur Wartung einer laufenden automatisierungstechnischen Anlage einen schnellen Überblick über die betriebsbedingten Diagnoseinformationen spezieller Feldgeräte der Anlage zu erhalten. Allerdings sind diese prozessrelvanten Informationen in erheblichem Maße geräteabhängig, so dass derartige Informationen aus verschiedenen Gerätequellen nicht ohne weiteres auf einer Anzeigeeinheit, bspw. eines Handhelds, visualisiert werden können.

Aus dem Stand der Technik ist aus der DE 103 40 234 A1 eine Maschinensteuerung bekannt geworden, die mit einer Anzeigeeinheit verbunden ist.

Ferner offenbart bspw. die Patentanmeldung EP 2012205 A2 ein Verfahren zum Generieren einer Bedienoberflächenkonfiguration für zumindest ein Feldgerät, bei dem eine Bedienoberflächenbeschreibungsdatei in einer Bedienoberflächenbeschreibungssprache aus einer Datenbank, die die erforderlichen Gerätedaten enthält, generiert wird.

Weiterhin ist aus der Patentanmeldung WO 2005/106632 ein Verfahren zum Navigieren in einem Bedienmenü eines elektronischen Gerätes mit mindestens einem Bedienelement und einer Anzeigeeinheit bekannt geworden. Insbesondere bei einer Änderung der Hardware der Feldgeräte und/oder der Anzeige-/Bedieneinheiten muss die Software entsprechend angepasst werden. Solche hardwaremäßige Änderungen sind aber bspw. auch durch den technischen Fortschritt bedingt.

Es ist damit ein hoher Wartungsaufwand erforderlich, wenn in einem Feldgerät beispielsweise Funktionserweiterungen oder Erweiterungen der Parameter vorgenommen werden, da diese Änderungen dann auch in der Anzeigeeinheit bzw. der Feldgerätelektronik und deren technischen Einstellungen vorgenommen werden müssen. Genauso muss die in den Feldgeräten enthaltene Software geändert werden, wenn sich die Hardware, insbesondere die Anzeigeeinheit, der Feldgeräte ändert oder ausgetauscht wird.

Der Erfindung liegt daher die Aufgabe zugrunde, die Darstellung von prozessrelevanten Informationen eines Feldgerätes weitestgehend unabhängig von der jeweilig verwendeten Anzeigeeinheit zu machen.

Die Aufgabe wird durch ein Feldgerät und durch ein Verfahren zum Betreiben des Feldgerätes gelöst.

Hinsichtlich des Verfahrens wird die Aufgabe durch folgende Verfahrensschritte gelöst:
- Aufrufen einer Funktion einer der Anzeigeeinheit zugehörigen Anzeigeelektronik durch eine dem Feldgerät zugehörige Feldgerätelektronik, welche Funktion zum Visualisieren einer Textinformation auf der Anzeigeeinheit dient,
- Ausführen der Funktion durch die Anzeigeelektronik,
   -- wobei das Ausführen der Funktion das Empfangen der Textinformation von der Feldgerätelektronik umfasst, wobei die Textinformation im Wesentlichen frei von das Visualisieren der Textinformation betreffenden Gestaltungsinformationen ist;
   -- wobei das Ausführen der Funktion ferner das Visualisieren der empfangenen Textinformation auf der Anzeigeeinheit anhand eines, insbesondere vollständig, in der Anzeigeelektronik der Anzeigeeinheit hinterlegten Anzeigeschemas umfasst, wobei das Anzeigeschema Gestaltungsinformationen, insbesondere in Form von Layouts und/oder Fonts, enthält.

Es ist also eine Idee der Erfindung, den Inhalt einer Information von ihrer Darstellung zu trennen. Dies kann hardwaremäßig durch eine Trennung in wenigstens zwei Elektronikeinheiten, einerseits die Feldgerätelektronik und andererseits die Anzeigeelektronik erreicht werden. Während die Feldgerätelektronik bspw. primär zum Erzeugen und/oder Verarbeiten der prozessrelevanten Information dient, dient die Anzeigeelektronik im Wesentlichen der Visualisierung der bspw. von der Feldgerätelektronik erzeugten Textinformation. Unter prozessrelevanter Information sind dabei bspw. sowohl Messwerte als auch Parameterwerte oder Statuswerte, bspw. des Feldgerätes, zu verstehen. Diese Textinformation kann dann von der Anzeigeelektronik, insbesondere auf einem zu der Anzeigeeinheit zugehörigen Bildschirm, visualisiert, d.h. graphisch dargestellt, werden. Dafür können in der Anzeigeelektronik wenigstens ein Anzeigeschema sowie anderweitige Gestaltungsinformationen hinterlegt sein. Da die Anzeigeschemata je nach Typ von Anzeigeeinheit unterschiedlich sein können, sieht das Verfahren zum Betreiben der Anzeigeeinheit vor, dass die Feldgerätelektronik eine Funktion der Anzeigeelektronik aufruft, die zumindest zum Visualisieren der Textinformation auf der Anzeigeeinheit dient. Bei der Anzeigeeinheit kann es sich um eine Vor-Ort-Anzeigeeinheit oder die Anzeigeeinheit eines sog. Handhelds oder die Anzeigeeinheit einer entfernten Warte handeln. Die aufgerufene Funktion kann je nach Typ der Anzeigeeinheit unterschiedliche Anzeigeschemata bspw. Tabellen, Listen, Anzeigemenus o.ä. zur Visualisierung nutzen.

Weitere zum Ausführen der Funktion durch die Anzeigeelektronik erforderliche Textinformation kann dann von der Anzeigeelektronik angefordert werden. Aufgrund der unterschiedlichen Größe bspw. der Bildschirme zweier unterschiedlicher Anzeigeeinheiten können daher auf einer auf einem Bildschirm dargestellten Seite bspw. eine unterschiedliche Anzahl von Werten angezeigt werden. Auf einer Anzeigeeinheit mit einem gegenüber einer anderen Anzeigeeinheit kleineren Bildschirm kann zur Auswahl bspw. ein Scrollen oder der Einsatz eines kleineren Fonts erforderlich sein. Es kann aber auch die Situation eintreten, dass auf einer Anzeigeeinheit mit einem kleineren Bildschirm nur bestimmte ausgewählte Informationen angezeigt werden können. Es ist daher von Vorteil die Funktion einer Anzeigeeinheit an die technischen Gegebenheiten der Anzeigeeinheit anzupassen, bspw. indem die Funktion in der Anzeigeeinheit hinterlegt ist und/oder speziell an die verwendete Anzeigeeinheit angepasst ist.

Nachdem also diese Funktion aufgerufen und die Textinformation Anzeigeeinheit übertragen bzw. von der Anzeigeeinheit empfangen wurde, kann die Textinformation, insbesondere angepasst an die spezifische Ausgestaltung der Anzeigeeinheit, auf der Anzeigeeinheit visualisiert werden. Die Visualisierung ist dabei bspw. von der in der Anzeigeelektronik hinterlegten Gestaltungsinformation wie z.B. Layouts in Form von bspw. Tabellen, Listen usw. und/oder Fonts abhängig. Ebenso kann die Visualisierung von der Hardware der verwendeten Anzeigeeinheit abhängig sein. Darunter ist bspw. die Farbdarstellung der verwendeten Anzeigeeinheit zu verstehen. Die Darstellung, insbesondere die Farbdarstellung, kann bspw. farbig oder monochrom sein.

Dies bietet den Vorteil, dass prozessrelevante Informationen für eine Mehrzahl verschiedenartiger Feldgeräte, d.h. Feldgeräte mit unterschiedlichen Anzeigeeinheiten, welche unterschiedliche Anzeigekapazitäten aufweisen, die jeweils vorhandene Anzeigekapazität regelmäßig zumindest näherungsweise optimal nutzen. Bei der Anzeigekapazität kann es sich bspw. um die Anzahl der Pixel handeln, die eine Anzeigeeinheit bzw. deren Anzeigeelement zur Verfügung stehen. Allgemeiner kann darunter die Information oder die Anzahl von Daten verstanden werden, die sich gleichzeitig auf dem Display darstellen lassen. Es genügt somit im Wesentlichen eine einzige Anzeigeeinheit für eine Vielzahl verschiedenartiger Feldgeräte/-elektroniken. Andererseits können dadurch unterschiedliche Anzeigeeinheiten an ein Feldgerät oder an eine Applikation angeschlossen werden. Durch die damit verbundenen hohen Stückzahlen an universellen Feldgeräten bzw. Anzeigeeinheiten können deren Herstellungskosten erheblich reduziert werden. Weiterhin wird dadurch der Einsatz neuartiger Bedienkonzepte wie z.B. Touch-Screen usw. ohne Anpassung der Feldgerätesoftware möglich.

Eine auf der Anzeigeeinheit dargestellte Seite kann im Wesentlichen mittels der von der Feldgerätelektronik erzeugten Textinformation erzeugt werden. Die benötigten Gestaltungsinformationen sind bspw. in einer Speichereinheit der Anzeigeelektronik hinterlegt. Das tatsächliche Aussehen einer Seite sowie jedes einzelnen Buchstabens ist also in der Anzeigeelektronik bspw. in Form eines Anzeigeschemas bzw. als Font und/oder Zeichensatz abgelegt. Diese darstellungsspezifischen Informationen fehlen, wenn die Textinformationen an einem anderen Rechner bearbeitet werden soll, der nicht über eine entsprechende Anwendung zur Verarbeitung der Textinformation verfügt. Selbst geringste Unterschiede in Buchstabenform oder Buchstabenabständen addieren sich innerhalb einer Zeile so schnell auf, dass plötzlich das letzte Wort nicht mehr in die gewünschte Zeile passt. Dadurch verschiebt sich der ganze weitere Text und die Gestaltung gerät völlig durcheinander.

Da im Wesentlichen nur die reine Textinformation übertragen wird und keine zusätzlichen die Visualisierung betreffenden Informationen, kann die an die Anzeigeeinheit zu übertragende Datenmenge reduzieren werden. Die Textinformation kann bspw. in Form von Daten vorliegen und/oder übertragen werden.

In einer Ausgestaltung des Verfahrens fragt die Anzeigeelektronik, insbesondere nach dem Aufrufen der Funktion durch die Feldgerätelektronik, die für die Ausführung der Funktion erforderlichen Textinformation, insbesondere von der Feldgerätelektronik, ab. Nach dem Aufrufen einer Funktion in der Anzeigeelektronik, sind zum Ausführen der Funktion bspw. zum Erzeugen einer Seite auf dem Bildschirm der Anzeigeeinheit noch die Inhalte erforderlich, mit der diese Seite gefüllt werden soll. Die Anzahl an Informationen, die auf einer Seite des Bildschirms der Anzeigeeinheit dargestellt werden kann, kann aber variieren. Daher werden nur die tatsächlich für die Darstellung der Seite benötigten Inhalte durch die Anzeigeelektronik von der Feldgerätelektronik abgerufen. Dadurch kann die zu übertragende Datenmenge weiter reduziert werden.

Eine weitere Ausgestaltung des Verfahrens umfasst die Schritte des Bedienens des Feldgerätes über eine der Anzeigeeinheit zugehörige Bedieneinheit, und des Übertragens eines durch das Bedienen ausgelösten Rückgabewerts der aufgerufenen Funktion, insbesondere beim Beenden der aufgerufenen Funktion, an die Feldgerätelektronik. Wie bereits erwähnt kann die Anzeigeeinheit über eine Anzeigeelektronik, einen Bildschirm und eine Bedieneinheit verfügen. Eine solche Anzeige-/Bedieneinheit kann als HMI, also als eine Mensch-Maschine-Schnittstelle, verwendet werden, um die Eingaben eines Benutzers zu verarbeiten. Durch die Eingaben können bspw. Einstellungen des Feldgerätes vorgenommen und dessen Funktionsweise gesteuert werden.

Sämtliche Informationen über die Visualisierung und/oder Editierung der Textinformation auf der Anzeigeeinheit sind tatsächlich nur in einer der Anzeigeeinheit zugehörigen oder zumindest zugeordneten Anzeigeelektronik vorhanden. Dafür kann bspw. eine Speichereinheit in der Anzeigeeinheit vorgesehen sein, in der diese Gestaltungsinformationen abgelegt werden bzw. abgelegt sind. Die Feldgerätelektronik muss daher nicht mehr die genaue Größe der Anzeigeeinheit, deren Farbdarstellung usw. kennen. Vielmehr fordert die Feldgerätelektronik die Anzeigeeinheit auf, prozessrelevante Information gemäß einer in der Anzeigeeinheit hinterlegten Darstellung zu Visualisieren. Diese Darstellung variiert natürlich in Abhängigkeit der zu Verfügung stehenden Anzeigeeinheit. Um eine einheitliche Darstellung auch auf unterschiedlichen Anzeigeeinheiten zu erlagen, kann derselbe Font bspw. auch in verschiedenen Größen vorliegen. Bestimmte Einstellungen eines Layouts wie bspw. Hintergrundfarbe etc. können jedoch bspw. durch Kontrollwörter in Textform an die Anzeigeeinheit übermittelt werden. Diese Kontrollwörter können in die Textinformation eingebaut werden, bevor diese an die Anzeigeeinheit gesendet wird. Ein Kontrollwort kann dafür bspw. in ein nicht druckbares Sonderzeichen gewandelt werden.

Die Layoutinformation kann auf der Anzeigeeinheit zu einer Seite (engl. Page) zusammengefasst und auf der Anzeigeeinheit visualisiert werden. Die Seite kann bspw. eine Auswahl an Steuerbefehlen präsentieren, welche mittels der Bedieneinheit ausgewählt werden können. Es können daher Funktionen aufgerufen werden, die als Text-Editor, Einfache-Auswahl-Liste etc. dienen, und deren Inhalte auf einer Seite dargestellt werden. Das Aufrufen und Ausführen einer Funktion kann dann als Erstellen einer Seite verstanden werden. Bei der Seite kann es sich bspw. um die Hauptmesswertseite handeln. Die Seite kann zur Initialisierung bspw. EingangsParameter benötigen. Die Anzeigeelektronik fordert dann die restlichen Daten, in Form von Textinformation, zum Ausfüllen der Seite an. Dabei können die einzelnen Einträge einer Seite jeweils separat abgefragt werden. Die dabei zu übertragende Datenmenge kann je nach Seite variieren.

In einer weiteren Ausgestaltung des Verfahrens wird die übermittelte Textinformation durch das Bedienen verändert, und die edierte Textinformation bspw. nach dem Übertragen des Rückgabewerts von der Feldgerätelektronik angefordert oder nach dem Übertragen des Rückgabewerts an die Feldgerätelektronik übermittelt.

In einer Ausführungsform des Verfahrens wird die Interpretation des Rückgabewerts bzw. der editierten Textinformation, insbesondere die Zuordnung zu einer gewünschten Einstellung des Feldgerätes, in der Feldgerätelektronik vorgenommen.

Im Fall von Eingaben über die Bedieneinheit können die über die Bedienelemente vorgenommenen Eingaben auf der derzeit visualisierten Seite abgebildet werden. Die durch die Eingaben editierten Daten werden dann an die Feldgerätelektronik gesendet, wo die editierte Textinformation ausgewertet werden kann. Zusätzlich oder Alternativ kann ein Rückgabewert wie z.B. "OK" oder "Cancel" usw. an die Feldgerätelektronik übermittelt werden, der durch das Bedienen der Bedieneinheit ausgelöst wird. Bei den Bedienelementen kann es sich um sog. Softkeys oder um hardwaremäßige Tasten handeln. Die der Betätigung eines dieser Bedienelemente zugeordnete Bedeutung kann durch die Feldgerätelektronik insbesondere in Abhängigkeit von der derzeit auf der Anzeigeeinheit visualisierten Seite bzw. der aufgerufenen Funktion festgelegt werden.

In einer Ausführungsform des Verfahrens beinhaltet der Schritt des Aufrufens der Funktion der Anzeigeeinheit den Schritt des Übermitteins von Daten von der Feldgerätelektronik an die Anzeigeelektronik.

In einer weiteren Ausführungsform des Verfahrens beinhaltet der Schritt des Empfangens der Textinformationen von der Feldgerätelektronik an die Anzeigeelektronik gleichfalls den Schritt des Empfangens von Daten von der Feldgerätelektronik an die Anzeigeeinheit. Diese Daten können zu diesem Zweck von der Feldgerätelektronik an die Anzeigeelektronik übermittelt werden.

In einer Variante des Verfahrens umfasst der Schritt des Übertragens eines Rückgabewerts an die Feldgerätelektronik ebenfalls den Schritt des Übermitteins von Daten von der Anzeigeelektronik an die Feldgerätelektronik.

In einer weiteren Variante des Verfahrens werden die Daten über ein erstes Protokoll übermittelt. Die Daten können dafür selbstverständlich kodiert werden oder kodiert sein.

In einer weiteren Variante des Verfahrens umfasst die Feldgerätelektronik einen ersten Display-Server, mittels welchem ersten Display-Servers die Daten, insbesondere über das erste Protokoll, an die Anzeigeeinheit übermittelt werden. Die Daten können, insbesondere mittels des ersten Protokolls, an die Anzeigeelektronik übermittelt werden. Der Display-Server kann bspw. von einer Rechnereinheit der Feldgerätelektronik ausgeführt werden und die Textinformationen erzeugten, welche an die Anzeigeeinheit übermittelt werden.

In einer Weiterbildung des Verfahrens weist die Anzeigeelektronik einen Display-Client auf, wobei mittels des Display-Clients die übermittelten Daten interpretiert und auf der Anzeigeeinheit visualisiert werden. Der Display-Client kann folglich eine Seite erzeugten, die auf der Anzeigeeinheit visualisiert wird. Bei dem Display-Server und/oder dem Display-Client kann es sich um Programme handeln, mittels denen der Datenaustausch zwischen der Feldgerätelektronik und der Anzeigeeinheit geregelt wird.

In einer weiteren Weiterbildung wird durch die aufgerufene Funktion ein Layout festgelegt, und die Textinformation in einem in der Anzeigeeinheit zur Verfügung stehenden Font auf der Anzeigeeinheit visualisiert. Ein Layout kann bspw. aus abstrakten Elementen mit definierten Eigenschaften, wie bspw. eine Tabelle, bestehen. Das Layout beinhaltet zunächst aber keine Inhalte.

In einer Umsetzung des Verfahrens werden in dem Fall, dass die Anzeigeeinheit mit dem Feldgerät verbunden ist, die Daten über eine Kommunikations-Schnittstelle, insbesondere eine USB-Schnittstelle, des Feldgerätes ausgetauscht. Durch die Modularisierung der Funktionalitäten des Feldgerätes, welche durch die Trennung zwischen Feldgerätelektronik und Anzeigeelektronik entsteht, können verschiedene Anzeigeeinheiten zur Visualisierung von prozessrelevanten Informationen eines Feldgerätes verwendet werden. Insbesondere wird dadurch die Visualisierung auf einem sog. Handheld und/oder einer entfernten Warte ermöglicht. Durch die Modularisierung ist aber eine Kommunikation zwischen den Teilnehmern des so entstandenen Netzwerks, hier mittels Display-Server und Display-Client, notwendig.

In einer weiteren Umsetzung des Verfahrens wird in dem Fall, dass die Anzeigeeinheit mit dem Feldgerät verbunden ist, und der Display-Client mit einem zweiten Protokoll über die Kommunikations-Schnittstelle mit dem Feldgerät kommuniziert, das erste Protokoll über das zweite Protokoll getunnelt. Dafür ist es aufgrund seiner Verbreitung und seiner Universalität vorteilhaft die bereits erwähnte USB-Schnittstelle und entsprechend das USB-Protokoll einzusetzen. Dadurch kann das Feldgerät bspw. an einen PC angeschlossen werden. Der Treiber für ein USB- Gerät ist üblicherweise in ein solches PC System integriert. Es lässt sich ein Netzwerk von Display-Servern bilden, welche die Textinformation verschiedener Elektronikeinheiten einer Feldgerätelektronik, wie bspw. Sensorelektronik, Hauptelektronik, I/O-Einheit usw., eines Feldgerätes mit einem Display-Client einer Anzeigeeinheit austauschen.

In einer weiteren Umsetzung des Verfahrens wird in dem Fall, dass die Anzeigeeinheit mit dem Feldgerät verbunden ist, der Display-Client mittels eines dritten Protokolls aus dem Feldgerät in die Anzeigeeinheit, insbesondere die Anzeigeelektronik, geladen. Falls die Anzeigeeinheit mit dem Feldgerät verbunden wird, und noch nicht über den notwendigen Display-Client verfügt, kann dieser auf einer Speichereinheit in dem Feldgerät hinterlegt sein. Der Display-Client kann dann an die Anzeigeeinheit übertragen werden. Im Anschluss kann der Display-Client bspw. auf der Anzeigeeinheit gestartet werden und die in der Feldgerätelektronik erzeugte Textinformation kann darauf angezeigt werden. Bei dem dritten Protokoll kann es sich ebenfalls um das USB-Protokoll handeln. Auf dem Feldgerät kann ein Programm, insbesondere der Display-Client, gespeichert sein, das über die USB-Schnittstelle zugänglich ist. Hilfsweise kann eine Autostartfunktion dem Benutzer einen Dialog anzeigen, der es dem Benutzer erlaubt das Programm direkt vom Speicherplatz auf dem Feldgerät zu starten. Das Programm stellt dem Benutzer dann ein Menu auf der Anzeige-/Bedieneinheit zur Verfügung, über das der Benutzer unter anderem eine Konfiguration des Feldgerätes vornehmen kann. Dazu wird bspw. mittels des Programms und insbesondere über die USB-Schnittstelle eine weitere Verbindung zwischen Feldgerät und Anzeigeeinheit hergestellt. Über diese Verbindung kann dann die Textinformation übertragen werden. Durch die Trennung zwischen Visualisierung und Inhalt kann das Programm für verschiedene Feldgeräte verwendet werden, wobei die Bedienung für jedes Feldgerät individuell erfolgt. Folglich ist kein spezifisches Wissen über das jeweilige Feldgerät bspw. in Form einer Device Description oder eines Device Type Managers erforderlich, um eines Konfiguration bspw. mittels PC durchzuführen.

In einer weiteren Umsetzung des Verfahrens weist das Feldgerät zusätzlich zur Feldgerätelektronik eine Sensorelektronik auf, welche Sensorelektronik einen zweiten Display-Server umfasst, über welchen zweiten Display-Server ebenfalls Textinformation in Form von Daten zwischen der Sensorelektronik und der Anzeigeelektronik mittels des ersten Protokolls ausgetauscht wird. Die Sensorelektronik kann zwar zu Kommunikationszwecken mit der Feldgerätelektronik und/oder der Anzeigeelektronik verbunden sein, ist aber in einer Ausgestaltung räumlich von ihr getrennt. Die Sensorelektronik eines Feldgerätes dient hauptsächlich zur Aufnahme der sog. Primärgröße, indem sie bspw. Rohmessdaten oder Rohmesswerte erzeugt. Diese Rohwerte/-messdaten können dann an die Feldgerätelektronik übermittelt werden. In der Feldgerätelektronik können dann aus den Rohmessdaten/-werten der Primärgröße zusätzliche sog. Sekundärgrößen abgeleitet werden. Der Display-Server der Sensorelektronik kann ebenso eigene Seiten auf der Anzeigeeinheit erstellen. Unabhängig davon kann die Hauptelektronik auch Seiten auf der Anzeigeeinheit erstellen, mittels denen die Konfiguration der Hauptelektronik wiedergegeben wird bzw. die Konfiguration der Hauptelektronik geändert wird. Dadurch können bspw. verschiedene Sensoren inklusive Sensorelektronik an eine Feldgerätelektronik angeschlossen werden, ohne dass dabei eine neue Software o.ä. auf das Feldgerät aufgespielt werden muss, d.h. ohne dass die Hauptelektronik deren Bedienung kennen und verwalten muss. Die Sensorelektronik benutzt dazu ihren eigenen Display-Server, um ihre eigene Parametrierung darzustellen und/oder vorzunehmen.

In einer weiteren Umsetzung des Verfahrens wird die Sensorelektronik und/oder die Feldgerätelektronik durch den Austausch der editierten Textinformation mit der Anzeigeelektronik konfiguriert. Dafür wird die editierte Textinformation in die Sensorelektronik bzw. die Feldgerätelektronik zurückgelesen und die darin vorgenommenen Einstellungen übernommen.

Hinsichtlich des Feldgeräts wird die Aufgabe, dass das Feldgerät eine Feldgerätelektronik aufweist, die dazu dient, eine Funktion der Anzeigeeinheit aufzurufen, welche Funktion zum Visualisieren einer Textinformation auf der Anzeigeeinheit dient, welche Feldgerätelektronik ferner dazu dient, die für das Ausführen der Funktion erforderlichen Textinformation, insbesondere in Form von Daten, an die Anzeigeeinheit zu übermitteln, dass die Anzeigeeinheit eine Anzeigeelektronik aufweist, die zum Ausführen der aufgerufenen Funktion dient, dass die Anzeigeelektronik ferner dazu dient, die übermittelten Textinformation anhand eines in der Anzeigeelektronik hinterlegten Anzeigeschemas, welches Gestaltungsinformationen, insbesondere in Form von Layouts oder Fonts, enthält, zu visualisieren.

Die Erfindung wird anhand der nachfolgenden Zeichnungen näher erläutert. Es zeigt:
Fig. 1: eine schematische Darstellung einer Feldgerätelektronik sowie einer Anzeigeeinheit mit einer Anzeigeelektronik, einem Bildschirm und Bedienelementen;
Fig. 2: eine Darstellung einer Feldgerätelektronik und einer Anzeigeeinheit mit einer Anzeigeelektronik, wobei der Display-Client in derselben Rechnereinheit ausgeführt wird wie der Display-Server;
Fig. 3: ein Ablaufdiagramm eines Datenaustauschs zwischen einer Feldgerätelektronik und einer Anzeigeeinheit zum Visualisieren einer Seite auf einem Bildschirm der Anzeigeeinheit;
Fig. 4: eine schematische Darstellung eines feldgeräte-internen Bussystem und
Fig. 5: eine schematische Darstellung der Struktur des feldgeräte-interne Bussystems.

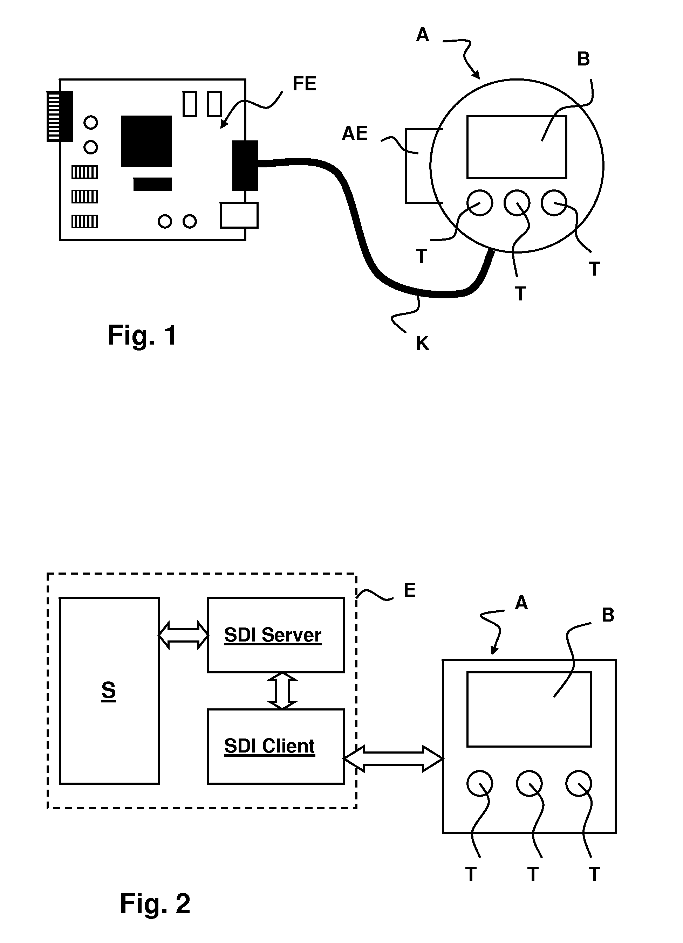

Figur 1 zeigt eine Anzeigeeinheit A sowie eine Feldgerätelektronik FE, die über ein Kabel K miteinander verbunden sind.

Die Anzeigeeinheit A weist einen Bildschirm B und drei Bedienelemente T auf. Bei dem Bildschirm B kann es sich um ein Liquid Crystal Display handeln. Bei den Bedienelementen T kann es sich bspw. um Drucktaster handeln.

Über das Kabel K, welches an eine Kommunikations-Schnittstelle I/O der Feldgerätelektronik FE angeschlossen ist, ist die Anzeigeeinheit A mit der Feldgerätelektronik FE verbunden. Anstelle des Kabels kann aber auch eine andere Art von Verbindung zwischen der Feldgeräteelektronik und der Anzeigeeinheit vorgesehen sein.

Ein Display-Server SDI-Server wird dabei von der Feldgerätelektronik FE ausgeführt und kann eine Vielzahl von Anzeigeeinheiten A mit unterschiedlichen Hardwareeigenschaften ansteuern. Dazu werden vom Display-Server SDI-Server Textinformationen zur Verfügung gestellt. Der Display-Server SDI-Server übermittelt diese Textinformation an einen Display-Client SDI-Client, welcher von der Anzeigelektronik AE ausgeführt wird und die erforderlichen Gestaltungsinformationen zum Visualisieren der gesendeten Textinformation enthält. Unter Darstellungsinformationen sind bspw. fonts, icons und bitmaps usw. zu verstehen, die zur Visualisierung der Textinformation dienen. Die Textinformation bzw. Textinformationen können bspw. Messwerte, Parameterwerte, Konfigurationswerte etc. sein.

Figur 2 zeigt eine weiter Ausführungsform eines Feldgerätes mit einer Elektronikeinheit E und einem Bildschirm B. In diesem Fall werden der Display-Client SDI-Client und der Display-Server SDI-Server von einer oder mehreren Komponenten einer Elektronikeinheit E ausgeführt. Die Komponenten der Elektronikeinheit E sind bspw. auf einer Platine oder zumindest in einem zusammenhängenden Abschnitt des Feldgerätes, der die Elektronik enthält, angeordnet. Bei der Steuereinheit S kann es sich bspw. um eine weitere Funktionalitäten des Feldgerätes handeln, die bspw. softwaremäßig ebenfalls von der Elektronikeinheit ausgeführt werden. Darunter fällt z.B. Messwertermittlung oder die Berechnung von Sekundärgrößen aus der bspw. mittels eines Sensor aufgenommenen primären Messgröße. Es ist möglich den Display-Server und den Display-Client auf einer oder mehreren unterschiedlichen elektrischen und/oder elektronischen Komponenten auszuführen. So kann bspw. der Display-Server von einer ersten Rechner- und/oder Speichereinheit und der Display-Client von einer zweiten Rechner- und/oder Speichereinheit ausgeführt werden bzw. dort hinterlegt sein. Bei der ersten und/oder zweiten Rechnereinheit kann es sich um einen Mikroprozessor oder Mikrocontroller handeln. Diese elektrischen und/oder elektronischen Komponenten können bspw. innerhalb eines Feldgerätes angeordnet sein. Die Komponenten der Elektronikeinheit die zur Ausführung des Display-Clients dienen, können dennoch der Anzeigeeinheit A, die aus dem Bildschirm B und der zweiten Rechner- und/oder Speichereinheit besteht, als zugehörig gelten. Der Display-Client ist auch mit dem Bildschirm B verbunden, wobei der Bildschirm B über diese Verbindung auf herkömmliche Art und Weise angesteuert wird, während die Textinformation zwischen dem Display-Server und dem Display-Client ausgetauscht werden.

Um prozessrelevante Informationen zur Anzeige auf der Anzeigeeinheit A bzw. den zugehörigen Bildschirm B zu bringen, ist eine bestimmte Anzahl von Seiten definiert. Es kann jeweils nur eine Seite auf dem Bildschirm B der Anzeigeeinheit A dargestellt werden. Eine Seite kann u.a. eine gewisse Anzahl von veränderlichen Werten, die bspw. editiert werden können, beinhalten. Bei den veränderlichen Werten kann es sich bspw. auch um die periodisch aktualisierten Messwerte eines Sensors handeln.

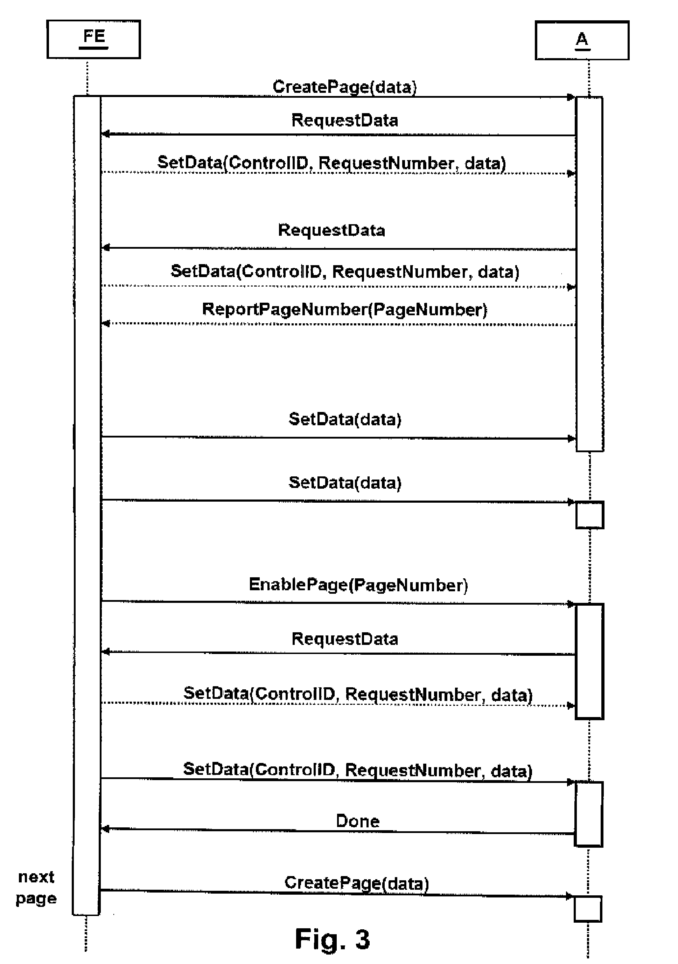

Figur 3 zeigt ein Ablaufdiagramm zur Erstellung einer Seite auf dem Bildschirm B einer Anzeigeeinheit A. Die Seiten können unterschiedliche Funktionalitäten aufweisen. Die Seiten können bspw. durch eine bestimmte Identifizierung voneinander unterschieden werden. In dem Fall, dass eine Seite initialisiert wird, erhält sie eine eindeutige Nummer ("PageNumber"). Diese Nummer wird der Feldgerätelektronik FE mitgeteilt. Mittels dieser Nummer kann diese Seite von der Feldgerätelektronik FE aus referenziert werden. Beim Senden bspw. eines neuen "CreatePage"-Befehls durch die Feldgerätelektronik FE ("Main Electronic") wird die bestehende Seite von der Anzeigeeinheit A ("display") verworfen.

Eine Seite kann dabei den ganzen Bildschirm B einer Anzeigeeinheit A oder nur einen Teil davon einnehmen. Die Anzeigeeinheit A wird also von der Feldgerätelektronik FE aufgefordert eine gewisse Seite darzustellen. Die Anzeigeeinheit A fordert dann wiederum die Daten von der Feldgerätelektronik FE mittels des "RequestData" Befehls an. Um die Seite auf dem Bildschirm B dazustellen, muss die Seite freigegeben werden. Dies geschieht mittels des "EnablePage" Befehls. Danach kann die Seite mittels der Bedienelemente editiert werden. Die editierte Textinformation wird dann in Form von Daten an die Feldgerätelektronik rückübertragen. Das Editieren kann bspw. mittels des "done" Befehls durch das Bedienpersonal beendet werden. In der Folge kann eine neue Seite von der Feldgerätelektronik aufgerufen werden und auf der Anzeigeeinheit dargestellt werden.

Beispielsweise beinhaltet eine Seite zur Auflistung von Parametern eine Zelle die fünf Elemente auf einem größeren Bildschirm B wiedergeben kann, während die Zelle auf einem kleineren Bildschirm B nur drei Elemente wiedergeben kann.

Nachdem sämtliche zur Initialisierung der Seite erforderlichen Daten abgefragt wurden ("RequestData", "SetData"), sendet die Anzeigeeinheit A den Befehl "ReportPageNumber" an die Feldgerätelektronik FE. Die Feldgerätelektronik FE kann daraufhin weiter Daten an die Anzeigeeinheit A senden.

Eine Änderung der Einstellungen mittels der Anzeigeeinheit kann dann wie folgt verlaufen:
1) Die Feldgerätelektronik FE ruft bspw. mittels des Befehls "Start Menu" eine Seite auf dem Bildschirm B auf
2) Der Bildschirm B zeigt das Menu an
3) Ein Benutzer sieht und/oder ändert die angezeigten Parametereinstellungen
4) Der Benutzer wählt eine Einstellung, bspw. "OK", aus und die Einstellungen werden gespeichert.
5) Die Anzeigeeinheit A sendet den Rückgabewert "Seite fertig" an die Feldgerätelektronik FE
6) Die Feldgerätelektronik FE liest die in der rückübertragenen, evt. editierten, Textinformation enthaltenen Einstellungen und aktualisiert seine Einstellungen entsprechend.
7) Die Feldgerätelektronik FE ruft eine neue Seite auf.

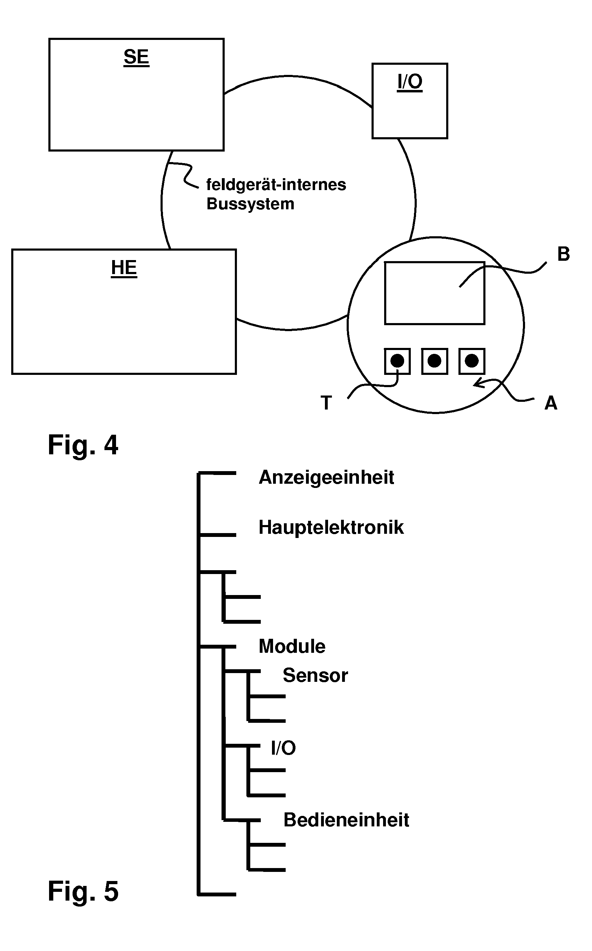

Figur 4 zeigt die über ein feldgeräte-internes Bussystem miteinander verbunden Elektronikmodule eines Feldgerätes. Bei den Teilnehmer dieses feldgeräte-internen Bussystems handelt es sich um Moduln, wie bspw. die Hauptelektronik HE des Feldgerätes, die Anzeigeeinheit A selbst, die Kommunikationsschnittstelle I/O sowie um Sensormodul. Jedes dieser Moduln kann über eine ihm zugehörige Elektronik und einen eignen Display-Server SDI-Server verfügen, der es ihm ermöglicht Informationen auf dem Bildschirm der Anzeigeeinheit A nach dem vorgeschlagenen Verfahren darzustellen.

Figur 5 zeigt die hierarchische Struktur der an das feldgeräte-interne Bussystem angeschlossenen Feldgerätmodule. Bei den Moduln handelt es sich wie in Figur 4 gezeigt, um die Hauptelektronik, einen Sensor SE, eine Kommunikationsschnittstelle I/O bspw. an den Feldbus, sowie um die Anzeige-/Bedieneinheit A, die über das feldbusinterne Bussystem miteinander verbunden sind. Der Sensor SE, die Kommunikationsschnittstelle I/O, sowie die Hauptelektronik HE verfügen über ihre jeweils eigenen Display-Server SDI-Server, mittels denen über einen auf der Anzeige-/Bedieneinheit A vorhandenen Dispaly-Client SDI-Client Informationen auf dem Bildschirm B der Anzeige-/Bedieneinheit A darstellen können. Es ist auch möglich, dass die Bedieneinheit getrennt von der Anzeigeeinheit A ausgeführt ist, und ebenfalls über einen Display-Client SDI-Client verfügt, mittels welchem die Bedieneinheit bspw. ihre Konfiguration auf dem Bildschirm B der Anzeigeeinheit A wiedergibt.

### Bezugszeichenliste

- A: Anzeigeeinheit
- AE: Anzeigeelektronik
- B: Bildschirm
- T: Bedienelement
- K: Kabel
- FE: Feldgerätelektronik
- E: Elektronikeinheit
- S: Steuereinheit
- FB: Feldbus
- HE: Hauptelektronik
- I/O: Kommunikationsschnittstelle
- SDI-Server: Display-Server
- SDI-Client: Display-Client
- SE: Sensor

## Patentansprüche

1. Verfahren zum Betreiben einer Anzeigeeinheit (A),
- welche Anzeigeeinheit (A) Bestandteil eines Feldgeräts der Prozessautomatisierungstechnik ist oder mit einem solchen Feldgerät verbindbar ist,
umfassend folgende Schritts-,
- Aufrufen einer Funktion einer der Anzeigeeinheit (A) zugehörigen Anzeigeelektronik (AE)
durch eine dem Feldgerät zugehörige Feldgerätelektronik (FE), welche Funktion zum Visualisieren einer Textinformation auf der Anzeigeeinheit (A) dient,
- Ausführen der Funktion durch die Anzeigeelektronik (AE),
- wobei das Ausführen der Funktion das Empfangen der Textinformation von der Feldgerätelektronik (FE) umfasst,
wobei die Textinformation, frei von das Visualisieren der
Textinformation betreffenden Gestaltungsinformationen ist;
- wobei das Ausführen der Funktion ferner das Visualisieren der empfangenen Textinformation auf der Anzeigeeinheit (A) anhand eines in der Anzeigeelektronik (AE) der Anzeigeeinheit (A) hinterlegten Anzeigeschemas umfasst,
wobei das Anzeigeschema Gestaltungsinformationen enthält.

2. Verfahren nach Anspruch 1,
wobei die Anzeigeelektronik (AE), insbesondere nach dem Aufrufen der Funktion durch die Feldgerätelektronik (FE), die für die Ausführung der Funktion erforderlichen Textinformation abfragt.

3. Verfahren nach wenigstens einem der vorherigen Ansprüche,
weiters umfassend den Schritt,
des Bedienens des Feldgerätes über eine der Anzeigeeinheit (A) zugehörige Bedieneinheit (T), und
des Übertragens eines durch das Bedienen ausgelösten Rückgabewerts der aufgerufenen Funktion an die Feldgerätelektronik (FE).

4. Verfahren nach dem vorherigen Anspruch,
wobei die übermittelte Textinformation durch das Bedienen editiert wird, und die edierte Textinformation nach dem Übertragen des Rückgabewerts von der Feldgerätelektronik (FE) angefordert wird oder nach dem Übertragen des Rückgabewerts an die Feldgerätelektronik (FE) übermittelt wird.

5. Verfahren nach Anspruch 3 oder 4,
wobei die Interpretation des Rückgabewerts bzw. der editierten Textinformation, insbesondere die Zuordnung zu einer gewünschten Einstellung des Feldgerätes, in der Feldgerätelektmnik (FE) vorgenommen wird.

6. Verfahren nach wenigstens einem der vorherigen Ansprüche,
wobei der Schritt des Aufrufens der Funktion der Anzeigeeinheit (A) den Schritt des Übermittelns von Daten von der Feldgerätelektronik (FE) an die Anzeigeelektronik (AE) beinhaltet,
und/oder
wobei der Schritt des Empfangens der Textinformationen gleichfalls den Schritt des Empfangens von Daten von der Feldgerätelektronik (FE) durch die Anzeigeelektronik (AE) beinhaltet,
und/oder
wobei der Schritt des Übertragens eines Rückgabewerts an die Feldgerätelektronik (FE) ebenfalls den Schritt des Übermittelns von Daten von der Anzeigeelektronik (AE) an die Feldgerätelektronik umfasst.

7. Verfahren nach Anspruch 6,
wobei die Daten über ein erstes Protokoll übermittelt werden.

8. Verfahren nach wenigstens einem der vorherigen Ansprüche,
wobei die Feldgerätelektronik (FE) einen ersten Display-Server umfasst, mittels welches ersten Display-Servers die Daten
an die Anzeigeeinheit (AE)
übermittelt werden.

9. Verfahren nach Anspruch 8,
wobei die Anzeigeelektronik (AE) einen Display-Client aufweist, und
wobei mittels des Dispiay-Clients die übermittelten Daten interpretiert und auf der Anzeigeeinheit (A) visualisiert werden.

10. Verfahren nach Anspruch 9,
wobei durch die aufgerufene Funktion ein Layout festgelegt wird, und
wobei die Textinformation in einem in der Anzeigeeinheit (A) zur Verfügung stehenden Font auf der Anzeigeeinheit (A) dargestellt wird.

11. Verfahren nach wenigstens einem der vorherigen Ansprüche,
wobei in dem Fall, dass die Anzeigeeinheit (A) mit dem Feldgerät verbunden ist,
die Daten über eine Kommunikations-Schnittstelle
des Feldgerätes ausgetauscht werden.

12. Verfahren nach einem der Ansprüche 10 oder 11,
wobei in dem Fall, dass die Anzeigeeinheit (A) mit dem Feldgerät verbunden ist,
der Display-Client mit einem zweiten Protokoll über die Kommunikations-Schnittstelle mit dem Feldgerät kommuniziert, und
wobei das erste Protokoll über das zweite Protokoll getunnelt wird.

13. Verfahren nach Anspruch 12,
wobei in dem Fall, dass die Anzeigeeinheit (A) mit dem Feldgerät verbunden ist,
der Display-Client mittels eines dritten Protokolls aus dem Feldgerät in die Anzeigeeinheit (A) geladen wird.

14. Verfahren nach dem vorherigen Anspruch,
wobei das Feldgerät zusätzlich zur Feldgerätelektronik (FE) eine Sensorelektronik aufweist,
weiche Sensorelektronik einen zweiten Display-Server umfasst,
über welchen zweiten Display-Server ebenfalls Textinformation in Form von Daten zwischen der Sensorelektronik und der Anzeigeelektronik (AE) mittels des ersten Protokolls ausgetauscht wird.

15. Feldgerät der Prozessautomatisierungstechnik mit einer Anzeigeeinheit (A) welche Bestandteil des Feldgerätes ist oder an das Feldgerät angeschlossen ist oder anschliessbar ist,
**dadurch gekennzeichnet,**
**dass** das Feldgerät eine Feldgerätelektronik (FE) aufweist, die dazu dient, eine Funktion der Anzeigeeinheit (A) aufzurufen,
welche Funktion zum Visualisieren einer Textinformation auf der Anzeigeeinheit (A) dient,
welche Feldgerätelektronik (FE) ferner dazu dient, die für das Ausführen der
Funktion erforderlichen Textinformation
an die Anzeigeeinheit (A) zu übermitteln,
wobei die Textinformation frei von das Visualisieren der Textinformation betreffenden Gestaltungsinformationen ist,
**dass** die Anzeigeeinheit (A) eine Anzeigeelektronik (AE) aufweist, die zum Ausführen der aufgerufenen Funktion dient,
**dass** die Anzeigeelektronik (AE) ferner dazu dient, die übermittelten Textinformation anhand eines in der Anzeigeelektronik (AE) hinterlegten Anzeigeschemas, welches Gestaltungsinformationen enthält, zu visualisieren.

## Claims

1. Procedure for operating a display unit (A),
- said display unit (A) being part of a field device used in process automation engineering or capable of being connected to such a field device, **comprising the following steps**:
- Invoking a function of display electronics (AE) pertaining to the display unit (A) by field device electronics (FE) pertaining to the field device and serving to visualize text information on the display unit (A),
- Execution of the function by the display electronics (AE),
-- wherein the execution of the function comprises receiving text information from the field device electronics (FE),
wherein the text information is free from the formatting information concerning the visualization of the text information;
- wherein the execution of the function further comprises the visualization of the text information received on the display unit (A) using a display scheme saved in the display electronics (AE) of the display unit (A), wherein the display scheme contains formatting information.

2. Procedure as claimed in Claim 1,
wherein the display electronics (AE) query the text information required to execute the function, particularly after the field device electronics (FE) call the function.

3. Procedure as claimed in at least one of the previous claims,
further comprising the following step:
operation of the field device via an operating unit (T) pertaining to the display unit (A), and
transmission of a return value of the invoked function to the field device electronics (FE), said value being triggered by the operation.

4. Procedure as claimed in the previous claim,
wherein the transmitted text information is edited as a result of the operation, and the edited text information is requested by the field device electronics (FE) after the return value has been transmitted, or is transmitted to the field device electronics (FE) after the return value has been transmitted.

5. Procedure as claimed in Claim 3 or 4,
wherein the interpretation of the return value or of the edited text information, especially the assignment to a desired field device setting, is performed in the field device electronics (FE).

6. Procedure as claimed in at least one of the previous claims,
wherein the step of invoking the function of the display unit (A) contains the step of transmitting data from the field device electronics (FE) to the display electronics (AE),
and/or
wherein the step of receiving the text information similarly contains the step of the display electronics (AE) receiving data from the field device electronics (FE), and/or
wherein the step of transmitting a return value to the field device electronics (FE) also comprises the step of transmitting data from the display electronics (AE) to the field device electronics.

7. Procedure as claimed in Claim 6,
wherein the data are transmitted via a first protocol.

8. Procedure as claimed in at least one of the previous claims,
wherein the field device electronics (FE) comprises a first display server via said first display server the data are transmitted to the display unit (A).

9. Procedure as claimed in Claim 8,
wherein the display electronics (AE) have a display client and wherein the transmitted data are interpreted and visualized on the display unit (A) by means of the display client.

10. Procedure as claimed in Claim 9,
wherein a layout is specified by the invoked function and wherein the text information is displayed on the display unit (A) in a font that is available in the display unit (A).

11. Procedure as claimed in at least one of the previous claims,
wherein if the display unit (A) is connected to the field device the data are exchanged via a communication interface of the field device.

12. Procedure as claimed in one of the Claims 10 or 11,
wherein if the display unit (A) is connected to the field device the display client communicates with the field device via the communication interface using a second protocol, and wherein the first protocol is tunneled via the second protocol.

13. Procedure as claimed in Claim 12,
wherein if the display unit (A) is connected to the field device the display client is loaded in the display unit (A) from the field device using a third protocol.

14. Procedure as claimed in the previous claim,
wherein the field device has sensor electronics in addition to the field device electronics (FE), wherein said sensor electronics comprise a second display server via said second display server text information is also exchanged in the form of data between the sensor electronics and the display electronics (AE) using the first protocol.

15. Field device used in process automation engineering with a display unit (A) which is part of the field device or is connected to the field device or can be connected to the field device,
**characterized in that**
the field device has field device electronics (FE) which are used to invoke a function of the display unit (A),
said function being used to visualize text information on the display unit (A), said field device electronics (FE) further serving to transmit the text information, which is required to execute the function, to the display unit (A),
wherein the text information is free from formatting information that concerns the visualization of text information,
**in that** the display unit (A) has display electronics (AE) which are used to execute the invoked function,
**in that** the display electronics (AE) further serve to visualize the transmitted text information using a display scheme which is saved in the display electronics (AE) and contains formatting information.

## Revendications

1. Procédé destiné à l'exploitation d'une unité d'affichage (A),
- laquelle unité d'affichage (A) fait partie intégrante d'un appareil de terrain de la technique d'automatisation des process, ou peut être reliée avec un tel appareil de terrain,
**comprenant les étapes suivantes** :
- Appel d'une fonction d'une électronique d'affichage (AE) associée à l'unité d'affichage (A)
par une électronique d'appareil de terrain (FE) associée à l'appareil de terrain, laquelle fonction sert à la visualisation d'une information textuelle sur l'unité d'affichage (A),
- Exécution de la fonction par l'électronique d'affichage (AE),
-- l'exécution de la fonction comprenant la réception de l'information textuelle par l'électronique d'appareil de terrain (FE),
l'information textuelle étant exempte des informations de mise en forme concernant la visualisation de l'information textuelle ;
- pour lequel l'exécution de la fonction comprend en outre la visualisation de l'information textuelle reçue sur l'unité d'affichage (A) au moyen d'un schéma d'affichage enregistré dans l'électronique d'affichage (AE) de l'unité d'affichage (A), le schéma d'affichage contenant des informations de mise en forme.

2. Procédé selon la revendication 1,
pour lequel l'électronique d'affichage (AE) consulte, notamment après l'appel de la fonction par l'électronique d'appareil de terrain (FE), l'information textuelle nécessaire pour l'exécution de la fonction.

3. Procédé selon au moins l'une des revendications précédentes,
comprenant en outre les étapes suivantes :
Commande de l'appareil de terrain via une unité de commande (T) associée à l'unité d'affichage (A), et
Transfert à l'électronique d'appareil de terrain (FE) d'une valeur de retour de la fonction appelée, laquelle valeur est déclenchée par la commande.

4. Procédé selon la revendication précédente,
pour lequel l'information textuelle transmise par la commande est éditée, et l'information textuelle éditée est demandée par l'électronique d'appareil de terrain (FE) après le transfert de la valeur de retour, ou est transmise à l'électronique d'appareil de terrain (FE) après le transfert de la valeur de retour.

5. Procédé selon la revendication 3 ou 4,
pour lequel l'interprétation de la valeur de retour ou de l'information textuelle éditée, notamment l'attribution à un réglage souhaité de l'appareil de terrain, est effectuée dans l'électronique d'appareil de terrain (FE).

6. Procédé selon au moins l'une des revendications précédentes,
pour lequel l'étape d'appel de la fonction de l'unité d'affichage (A) contient l'étape de transmission de données depuis l'électronique d'appareil de terrain (FE) vers l'électronique d'affichage (AE),
et/ou
pour lequel l'étape de réception de l'information textuelle contient également l'étape de réception de données de l'électronique d'appareil de terrain (FE) par l'unité d'affichage (AE),
et/ou
pour lequel l'étape de transfert d'une valeur de retour à l'électronique d'appareil de terrain (FE) comprend également l'étape de transmission de données depuis l'électronique d'affichage (AE) à l'électronique d'appareil de terrain.

7. Procédé selon la revendication 6,
pour lequel les données sont transmises au moyen d'un premier protocole.

8. Procédé selon au moins l'une des revendications précédentes,
pour lequel l'électronique d'appareil de terrain (FE) comprend un premier serveur d'affichage, au moyen duquel les données sont transmises à l'unité d'affichage (A).

9. Procédé selon la revendication 8,
pour lequel l'électronique d'affichage (AE) comprend un client d'affichage, et pour lequel les données transmises sont interprétées et visualisées sur l'unité d'affichage (A) au moyen du client d'affichage.

10. Procédé selon la revendication 9,
pour lequel est définie une mise en forme par la fonction appelée, et pour lequel l'information textuelle est représentée sur l'unité d'affichage (A) selon une police disponible dans l'unité d'affichage (A).

11. Procédé selon au moins l'une des revendications précédentes,
pour lequel, dans le cas où l'unité d'affichage (A) est reliée avec l'appareil de terrain,
les données sont échangées via une interface de communication de l'appareil de terrain.

12. Procédé selon la revendication 10 ou 11,
pour lequel, dans le cas où l'unité d'affichage (A) est reliée avec l'appareil de terrain,
le client d'affichage communique avec l'appareil de terrain au moyen d'un deuxième protocole via l'interface de communication, et pour lequel le premier protocole est tunnelé via le deuxième protocole.

13. Procédé selon la revendication 12,
pour lequel, dans le cas où l'unité d'affichage (A) est reliée avec l'appareil de terrain,
le client d'affichage est chargé depuis l'appareil de terrain dans l'unité d'affichage (A) au moyen d'un troisième protocole.

14. Procédé selon la revendication précédente,
pour lequel l'appareil de terrain comprend, outre l'électronique d'appareil de terrain (FE), une électronique de capteur,
laquelle électronique de capteur comprend un deuxième serveur d'affichage, par l'intermédiaire duquel une information textuelle est également échangée sous forme de données entre l'électronique de capteur et l'électronique d'affichage (AE) au moyen du premier protocole.

15. Appareil de terrain de la technique d'automatisation des process avec une unité
d'affichage (A)
laquelle unité d'affichage (A) fait partie intégrante de l'appareil de terrain ou est raccordée ou raccordable à l'appareil de terrain,
**caractérisé**
**en ce que** l'appareil de terrain comporte une électronique d'appareil de terrain (FE), qui sert à appeler une fonction de l'unité d'affichage (A),
laquelle fonction sert à la visualisation d'une information textuelle sur l'unité d'affichage (A),
laquelle électronique d'appareil de terrain (FE) sert en outre à transmettre à l'unité d'affichage (A) l'information textuelle nécessaire à l'exécution de la fonction, l'information textuelle étant exempte des informations de mise en forme concernant la visualisation de l'information textuelle,
**en ce que** l'unité d'affichage (A) comporte une électronique d'affichage (AE), qui sert à l'exécution de la fonction appelée,
**en ce que** l'électronique d'affichage (AE) sert en outre à visualiser l'information textuelle transmise au moyen d'un schéma d'affichage enregistré dans l'électronique d'affichage (AE), lequel schéma contient des informations de mise en forme.
